# EUROPEAN PATENT APPLICATION

(11) **EP 2 541 390 A2**
(43) Date of publication of application: **02.01.2013**
(21) Application number: 12155113.9
(22) Date of filing: 13.02.2012
(51) Int. Cl.: G06F 3/06, G06F 11/32

(54) **Method and system of detecting redundant array of independent disks and transferring data**

(30) Priority: 29.06.2011 TW 100122727
(71) Applicant: Giga-Byte Technology Co., Ltd., Taipei 231 (TW)
(72) Inventor: Chen, Shun Chen, 231 Hsin Tien (TW); Kao, Han Yu, 231 Hsin Tien (TW); Lin, Hou-Yuan, 231 Hsin Tien (TW)
(74) Representative: Schwerbrock, Florian

(57) **Abstract**

A system is utilized for detecting a RAID which includes a detector and a processor which electrically connects with the detector. The detector detects read/write state of a plurality of storage units, and generates a signal according to the read/write state respectively. The processor receives the signal, and determines the read/write state corresponding to the signal. When the read/write state of a first storage unit of the storage units is determined abnormal and wherein the processor sends a control signal, so as to interrupt a RAID mode of the system. Then, data stored in the first storage unit moves to the rest of the storage units according to the control signal.

## Description

### BACKGROUND OF THE INVENTION

### Field of Invention

The present invention relates to a method and a system of detecting redundant array of independent disks (RAID) and transferring data, and more particularly relates to a method and a system of detecting RAID and transferring data, which are used for transferring data from the abnormal storage unit.

### Related Art

A server device usually includes one or multiple disk drives to store data, wherein data read/write speed of the disk drive is dependant on processing speed of the server device. The existing HDD can be discriminated to hard disk drive (HDD) and solid state disk drive (SSD), wherein the HDD is utilizing the volatile memory or the non-volatile memory to improve data read/write speed. Although the data read/write speed of the SSD is faster than data read/write speed of the HDD, nevertheless, the SSD exists the problem that data can not be stored permanently. Furthermore, the purpose of the server device is for data storage, so that the server usually uses the HDD as the main storage device to store data instead of using the SSD as the main storage device in the existing server device.

However, due to the data read/write speed of the disk drive is dependant on processing speed of the server device, in particular, the server device should be provided with a preferred processing speed and a preferred data read/write speed, so as to obtain the effectiveness that multiple users are able to download or upload data simultaneously. In order to achieve the preferred data read/write speed of the HDD, a disk array manner is used to obtain its effectiveness. The so called "redundant array of independent disks (RAID)", and the existing RAID mode usually is discriminated as RAID 0, RAID 1, RAID 2, RAID 3 or RAID 5, and additionally, the existing RAID mode further is discriminated as different mode according to the specific requirements, such as RAID6, RAID 7 and so on. Although the foregoing RAID modes are totally different, but on the whole, the foregoing RAID modes are utilized by the RAID which is assembled with at least two disk drives, so as to obtain the preferred data read/write speed and preferred efficiency of data-backup.

However, the server device obtains the preferred processing speed by the RAID which has at least two disk drives. If one of the disk drives is failed, and the data stored therein could be damaged or disappeared, in particular, the data is divided to the several parts and stored into the disk drives of the RAID respectively. Thus, when a portion of data is damaged, that will cause data disappear and unrecoverable.

Therefore, the existing problem that the hard disk drives of the RAID become abnormal and then cause data damaged or disappeared, which is a person skilled in the art should solves firstly.

### SUMMARY OF THE INVENTION

In view of the foregoing problems, the present invention is directed to a method and a system of detecting redundant array of independent disks (RAID) and transferring data for solving the problems existing in the prior art, which when the hard disk drive of the RAID is abnormal, the data is thus damaged or disappeared, even unrecoverable.

The present invention discloses a method of detecting RAID and transferring data, the RAID composed of a plurality of storage units, and the method includes the following steps : a RAID executes a RAID mode normally, and a detector detects a read/write state of the plural storage units , wherein the detector generates signals according to the read/write state of the storage units respectively, and the detector transmits the signal to a processor. Further, the processor determines the read/write state corresponding to the signals, and the processor determines the read/write state of a first storage unit of the storage units is abnormal, and the processor sends a control signal to interrupt the RAID mode, and moves data stored in the first storage unit to the rest of the normal storage units.

The present invention discloses a system detecting the RAID composed of plural storage units, wherein the RAID executes the RAID mode normally. The system includes the detector and the processor, wherein the detector is electrically connected to the storage units and the detector detects the read/write state of the storage units, and the detector generates signals according to the read/write state of the storage units respectively. Further, the processor is electrically connected to the detector, the processor receives the signals that transmitted from the detector, and the processor determines the read/write state corresponding to the signals. When the read/write state of at least one of the storage units is determined abnormal, the processor sends a control signal to interrupt the RAID mode and moves data stored in the abnormal storage unit to other normal storage unit.

The effectiveness of the present invention is that, when one of storage unit of the RAID is determined abnormal, the system of the invention can transfer data that stored in the abnormal storage unit immediately, so as to avoid data damaged or disappeared that due to the storage unit's abnormality or damage.

The technical characteristics, realization and features of the present invention will become apparent with the detailed description of preferred embodiments and related drawings as follows.

### BRIEF DESCRIPTION OF THE DRAWINGS

Figure 1A illustrates the perspective diagram of the first embodiment of the present invention.
Figure 1B illustrates the flow chart diagram of the first embodiment of the present invention.
Figure 2A illustrates another perspective diagram of the first embodiment of the present invention.
Figure 2B illustrates the flow chart diagram of detecting the storage capacity of the storage unit of the first embodiment of the present invention.
Figure 3A illustrates the perspective diagram of the second embodiment of the present invention.
Figure 3B illustrates another perspective diagram of the second embodiment of the present invention.

### DETAIL DESCRIPTION OF THE INVENTION

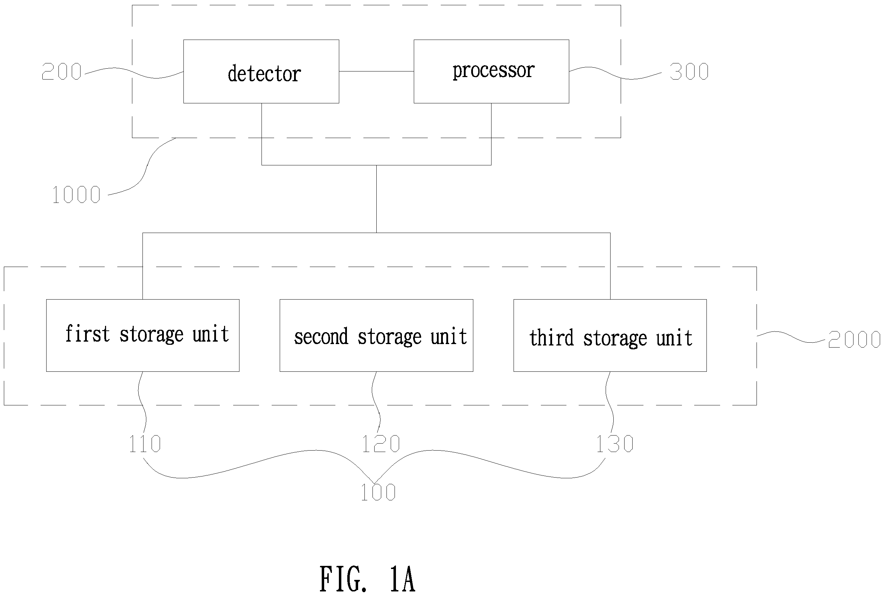

FIG. 1A shows the perspective diagram of the first embodiment of the present invention. The system 1000 of this disclosed embodiment which is utilized for detecting the redundant array of independent disks (RAID) 2000 and transferring data, wherein the RAID 2000 includes plural storage units 100. In order for better understanding of the present invention, whereby as in the first embodiment that the storage units 100 includes a first storage unit 110, a second storage unit 120 and a third storage unit 130. However, a person skilled in the art can change type or number of the storage unit based on his/her specific requirements. Furthermore, the storage units 100 can be magnetic domain of the hard disk drive or the whole hard disk drive, wherein the first storage unit 110 and the second storage unit 120 can be the solid state drive (SSD), and the third storage unit 130 can be the hard disk drive. The RAID 2000 executes the RAID mode normally, and the RAID mode can be any variety of the RAID, such as RAID 0, RAID 1, or RAID 3.

The system 1000 of this disclosed embodiment includes a detector 200 and a processor 300, wherein the detector 200 is electrically connected to the storage units 100, and the detector 200 detects a read/write state from the storage units 100, and then generates the signals according to the read/write state of the storage units 100 respectively. Substantially, the read/write state can be the data read/write speed, the data transmission speed, and the voltage variation value or the data integrity from the storage units 100. A person skilled in the art can determine various states of the storage units 100 to achieve the effectiveness in the disclosed embodiment based on his/her requirements.

Moreover, the detector 200 and the processor 300 disclosed in this embodiment is an integrated circuit (IC) respectively, wherein the processor 300 can be the south bridge chip or the north bridge chip. Further, the processor 300 is electrically connected to the detector 200, wherein the processor 300 receives the signals transmitted from the detector 200, and the processor 300 determines the read/write state corresponding to the signals.

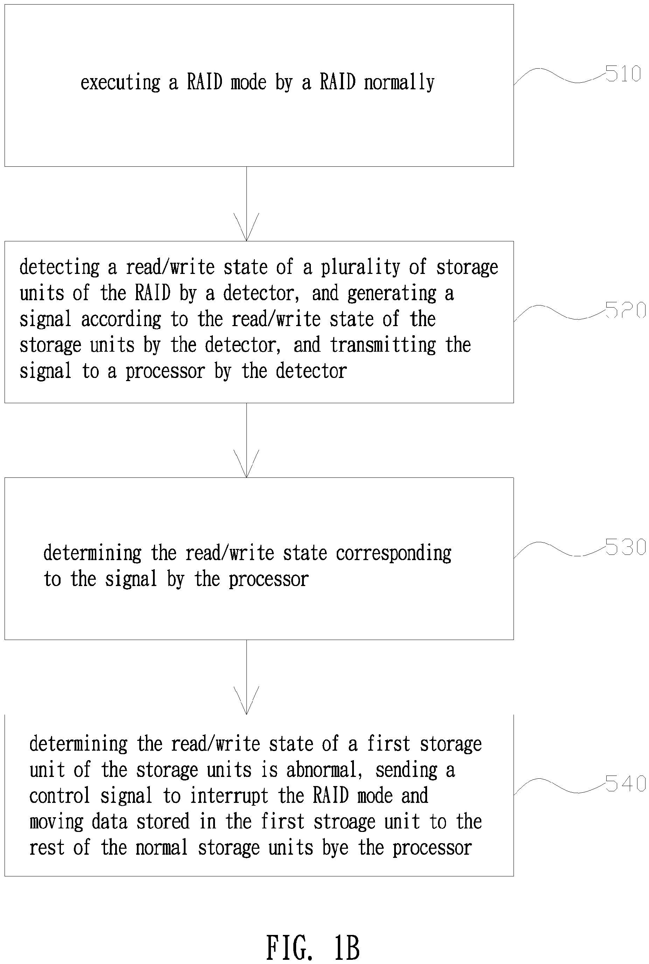

FIG. 1B shows the flow chart diagram of the first embodiment of the present invention, and a method of detecting RAID and transferring data which includes the following steps:
Firstly, the RAID 2000 executes the RAID mode normally (step 510), and the detector 20 detects the read/write state of the storage units 100 of the RAID 2000, wherein the detector 200 generates the signals according to the read/write state of the storage units respectively and then transmits the signal to the processor 300 by the detector 200 (step 520). Subsequently, the processor 300 determinates the read/write state corresponding to the signal (step 530). When the processor 300 determines the read/write state of the first storage unit 110 of the storage units 100 is abnormal, the processor 300 is sending the control signal to interrupt the RAID mode and moving data stored in the first storage unit 110 (abnormal storage unit) to the rest of the storage unit 100 (step 540).

Please refer to FIG. 1A, while the RAID 2000 executes a RAID mode normally, and the detector 200 detects the read/write state of the storage units 100 of the RAID 2000, the detector 200 generates the signals according to the read/write state respectively and transmits the signal to the processor 300. Subsequently, when the processor 300 determines that the read/write state from the first storage unit 110 of the storage unit 100 is abnormal, the processor 300 sends the control signal to the RAID 2000 and interrupts the RAID mode. Thereafter, data stored in the abnormal first storage unit 110 is moved to the second storage unit 120. Likewise, if the read/write state from the second storage unit 120 is abnormal, the processor 300 sends the control signal to the RAID 2000 and interrupts the RAID mode. Thereafter, data stored in the abnormal second storage unit 120 is moved to the first storage unit 110.

The above-mentioned method is not only limited to data transferring between the first storage unit 110 and the second storage unit 120, but also can be further applied to the third storage unit 130. That is to say, the third storage unit 130 can backup the storage unit 120 if the capacity of the second storage unit 120 is not enough to store data transferred from the abnormal first storage unit 110.

In other words, whether the read/write state of any one storage unit of the storage units 100 is abnormal or not, data stored in the abnormal storage unit can be moved to the first storage unit 110, the second storage unit 120, or the third storage unit 130. Even further, a person skilled in the art can selectively change number of the storage units 100 according to his/her needs.

Furthermore, the foregoing step 520 includes following steps of: setting a time interval to the detector 200 for detecting the read/write state of the storage units 100, which can be a millisecond, a centi-millisecond, or a milli-millisecond. Even further, the present disclosure also includes all approaches by setting a proper interval time manner to detect the read/write state of the RAID 2000.

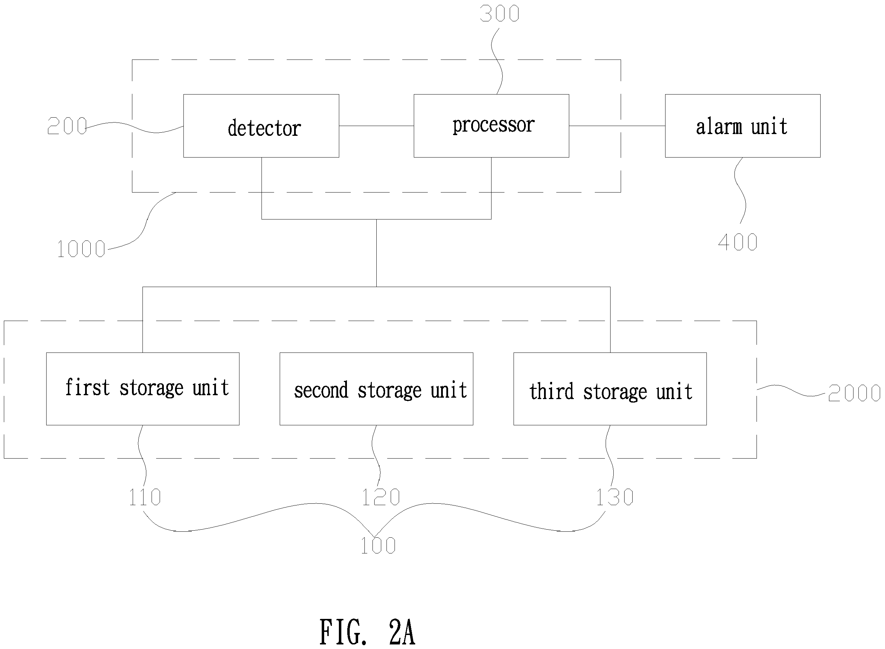

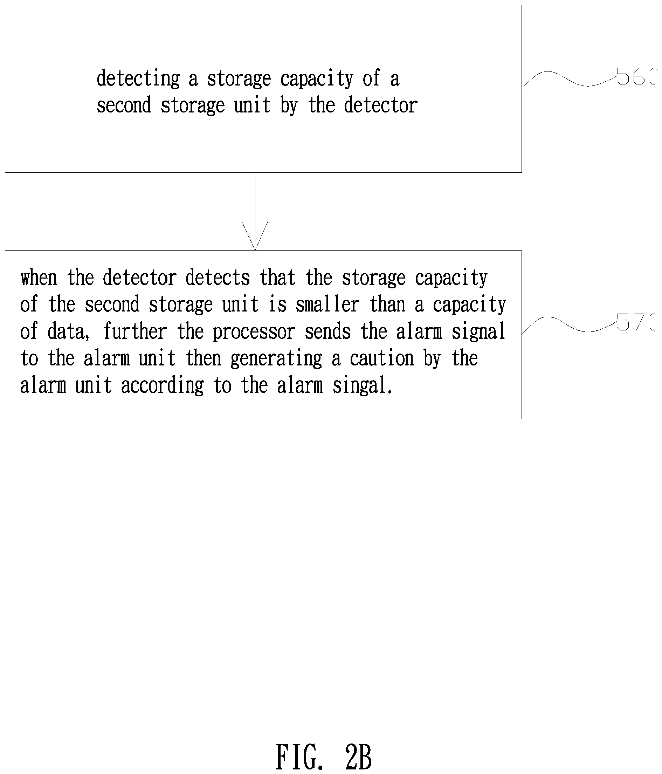

FIG. 2A shows another perspective diagram of the first embodiment of the present invention, in this disclosed embodiment, the system 1000 further includes an alarm unit 400 which is electrically connected to the processor 300. Moreover, FIG. 2B (please also refer to FIG. 2A) shows the flow chart diagram of detecting the storage capacity of the storage unit of the first embodiment of the present invention. The method of detecting RAID and transferring data in the first embodiment further includes the following steps of: detecting the storage capacity of the second storage unit 120 by the detector 200 (step 560), and, when the detector 200 detects that the storage capacity of the second storage unit 100 is smaller than the stored data volume , the processor 300 further sends the alarm signal to the alarm unit 400 and generating a caution by the alarm unit 400 according to the alarm signal (step 570).

The storage unit 100 disclosed in the above-mentioned step 560 and step 570 can be the first storage unit 110, the second storage unit 120, or the third storage unit 130. Furthermore, the above-mentioned alarm unit 400 can be the alarm lamp, the display screen, or the speaker. However, a person skilled in the art can selectively change any various alarm units 400 according to his/her needs.

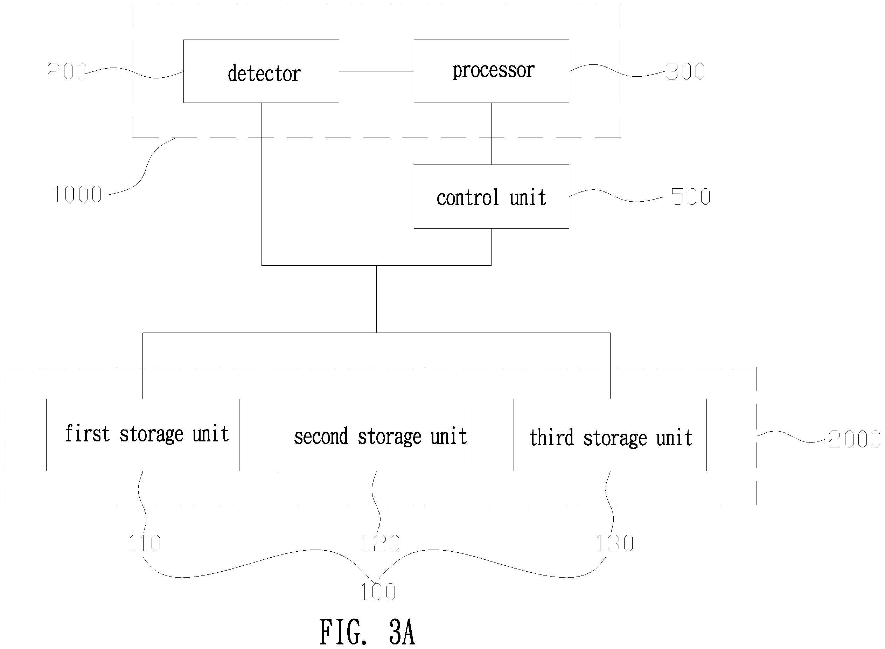

FIG. 3A shows the perspective diagram of the second embodiment of the present invention, in this disclosed embodiment, the system 1000 further includes the control unit 500 which is electrically connected to the processor 300 and the RAID 2000. The control unit 500 receives the control signal transmitted from the processor 300 and then commands an abnormal storage unit 100 to move stored data to a normal storage unit 100. Furthermore, the foregoing step 540 includes the following steps of: sending the control signal to the control unit 500 by the processor 300, interrupting the RAID mode by the control unit 500, and moving the data stored in the first storage unit 110 to the rest of the storage units 100.

If the read/write state from the first storage unit 110 is abnormal, the processor 300 sends the control signal to the control unit 500, and the control unit 500 receives the control signal to interrupt the RAID mode. Thereafter, the data stored in the abnormal first storage unit 110 is moved to the second storage unit 120.

Likewise, if the read/write state of the second storage unit 120 is abnormal, the processor 300 sends the control signal to the control unit 500 and the control unit 500 interrupts the RAID mode according to the signal received. Thereafter, the data stored in the abnormal second storage unit 120 is moved to the first storage unit 110. The above-mentioned method is not only limited to data transferring between the first storage unit 110 and the second storage unit 120, but also can be further applied to the third storage unit 130. That is to say, the third storage unit 130 can backup the storage unit 120 if the capacity of the second storage unit 120 is not enough to store the data transferred from the abnormal first storage unit 110.

In other words, whether the read/write state of any storage unit 100 is abnormal or not, data stored in the abnormal storage unit 100 can be moved to the first storage unit 110, the second storage unit 120, or the third storage unit 130. However, a person skilled in the art can change the number of the storage units selectively based on his/her requirements.

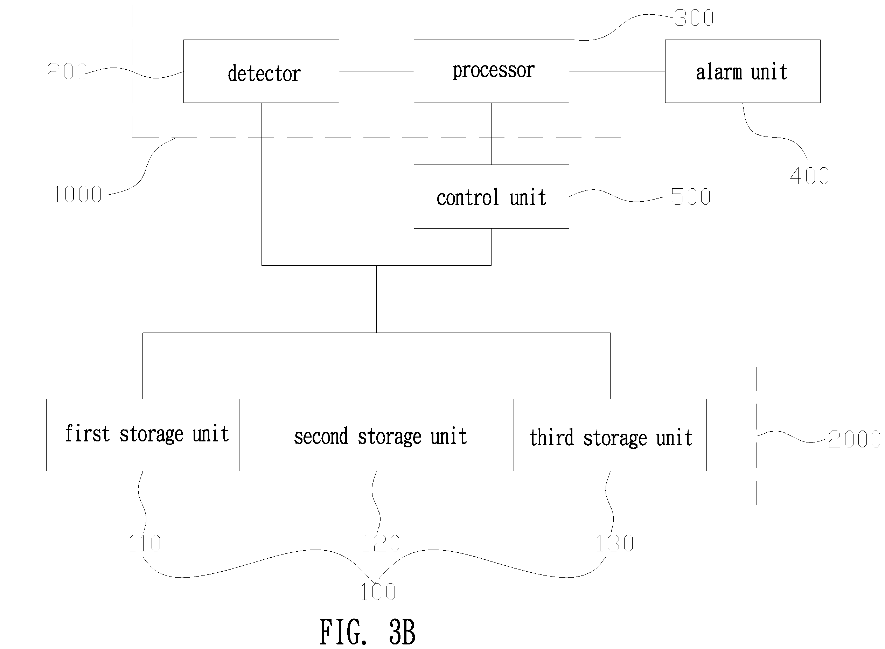

FIG. 3B shows the perspective diagram of the second embodiment of the present invention, in this disclosed embodiment, the system 1000 further includes an alarm unit 400, which is electrically connected to the processor 300. When the detector 200 detects that the storage capacity of the second storage unit 120 is smaller than the stored data volume, the processor 300 further sends the alarm signal to the alarm unit 400 and the alarm unit 400 generates a caution by the alarm unit 400 according to the alarm signal. Moreover, the above-mentioned alarm unit 400 can be the alarm lamp, the display screen, or the speaker. However, a person skilled in the art can change any various alarm units 400 according to his/her needs.

The present invention has been disclosed as mentioned-above and it is understood the embodiments are not intended to limit the scope of the present invention. Moreover, as the contents disclosed herein should be readily understood and can be implemented by a person skilled in the art, all equivalent changes or modifications which do not depart from the spirit of the present invention should be encompassed by the appended claims.

## Claims

1. A method of detecting redundant array of independent disks (RAID) (2000) and transferring data, the RAID composed of a plurality of storage units (100) and the method **characterized by** comprising the following steps of:
executing a RAID mode by a RAID (2000) normally;
detecting a read/write state of the plurality of storage units (100) by a detector (200);
generating a signal according to the read/write state of the storage units (100) by the detector (200);
transmitting the signal to a processor (300) by the detector (200);
determining the read/write state corresponding to the signal by the processor (300); and
if the read/write state of a first storage unit of the storage units (100) is abnormal, sending a control signal to interrupt the RAID mode and moving data stored in the first storage unit (110) to the rest of the storage units (120, 130) by the processor (300).

2. A method as claimed in claim 1, further comprising the step of:
setting a time interval to the detector (200) for detecting the read/write state of the storage units (100).

3. A method as claimed in claim 1, wherein the step of determining the read/write state further comprises the step of determining the read/write state according to one or combination of a data read/write speed, a data transmission speed, a voltage variation value, and a data integrity of the storage units (100).

4. A method as claimed in claim 1, further comprising the steps of:
detecting a storage capacity of a second storage unit (120) by the detector (200);
if the storage capacity of the second storage unit (120) is smaller than the volume of data, sending an alarm signal to an alarm unit (400); and
generating a caution by the alarm unit (400) according to the alarm signal.

5. A method as claimed in claim 1, further comprising the step of:
sending a control signal to a control unit (500) by the processor (300);
interrupting the RAID mode by the control unit (500); and
moving the data stored in the first storage unit (110) to the rest of the storage units (120, 130).

6. A system (1000) detecting a RAID (2000) composed of a plurality of storage units (100) and executing a RAID mode normally, the system (1000) **characterized by** comprising:
a detector (200) electrically connected to the storage units (100), detecting a read/write state of the storage units (100), and generating signals according to the read/write state of the storage units (100) respectively; and
a processor (300) electrically connected to the detector (200), receiving the signals transmitted from the detector (200), and determining the read/write state corresponding to the signals;
wherein, while the read/write state of first storage unit (110) of the storage units (100) is determined abnormal, the processor (300) sends a control signal to interrupt the RAID mode and moves data stored in the first storage unit (110) to the rest of the storage units (120, 130).

7. A system (1000) as claimed in claim 6, wherein the detector (200) is an electronic circuit or an integrated circuit.

8. A system (1000) as claimed in claim 6, further comprising an alarm unit (400) electrically connected to the processor (300); wherein, when a storage capacity of a second storage unit (120) is smaller than the data volume, the processor (300) sends an alarm signal to the alarm unit (400), so as to command the alarm unit (400) to generate a caution according to the alarm signal.

9. A system (1000) as claimed in claim 6, further comprising a control unit (500) electrically connected to the processor (300) and the RAID (1000), and wherein the control unit (500) receives the control signal transmitted from the processor (300) and commands data stored in the first storage unit (110) to move to the rest of the storage units (120, 130).

10. A system (1000) as claimed in claim 9, wherein the control unit (500) is an integrated circuit.

11. A system (1000) as claimed in claim 6, wherein the processor (300) is a south bridge chip or a north bridge chip.

12. A system (1000) as claimed in claim 6, wherein the read/write state includes one or the combination of a data read/write speed, a data transmission speed, a voltage variation value or a data integrity of the storage units (100).
